# EUROPÄISCHE PATENTANMELDUNG

(11) **EP 1 308 345 A1**
(43) Veröffentlichungstag der Anmeldung: **07.05.2003**
(21) Anmeldenummer: 01125878.7
(22) Anmeldetag: 30.10.2001
(51) Int. Cl.: B60P 3/14, B60R 11/00, A47B 43/00, B60P 3/20

(54) **KFZ-Einbauregal**

(71) Anmelder: SORTIMO INTERNATIONAL AUSRÜSTUNGSSYSTEME FÜR SERVICEFAHRZEUGE GmbH, D-86441 Zusmarshausen (DE)
(72) Erfinder: Elterlein, Paul, 86152 Augsburg (DE)
(74) Vertreter: Zipse & Habersack

(57) **Zusammenfassung**

KFZ-Einbauregal, insbesondere für den Einbau in Kühl-Kastenfahrzeuge, bestehend aus seitlichen Stützholmen (1) zur Befestigung an den Fahrzeugwänden mittels jeweils eines unteren (2) und eines oberen Lagers (3) sowie aus Fachböden (4) zum Anbringen an die Stützholme in verschiedenen Höhen. Das untere Befestigungslager (2) stützt den Stützholm (1) schwenkbar von und zur Fahrzeugwand ab, während mittels des oberen Befestigungslagers (3) der Stützholm (1) mit einstellbarem Abstand zur Fahrzeugwand festlegbar ist. Die Fachböden (4) sind an den Stützholmen (1) mittels Adapterbügeln (5) gehalten, die ihrerseits mit verstellbarer Neigung und einstellbarem Abstand des Fachbodenauflagers am Stützholm (1) angebracht sind.

## Beschreibung

Die Erfindung betrifft ein KFZ-Einbauregal, insbesondere für den Einbau in Kühl-Kastenfahrzeuge, gemäß dem Oberbegriff des Anspruchs 1.

Die Fahrzeuginnenwände und insbesondere die Innenwände von Kühl-Kastenfahrzeugen stehen meist nicht vertikal auf dem Fahrzeugboden, sondern Sie verjüngen sich leicht nach oben. Ihre Schräge bzw. Neigung variiert von Fahrzeugtyp zu Fahrzeugtyp. Es ist daher schwierig und mit besonderem Aufwand verbunden, Regale einzubauen. In besonderem Maße gilt dies für Kühl-Kastenfahrzeuge, wo die Wärmedämmung die Zugänglichkeit zu den Befestigungspunkten an der KFZ-Karosserie beeinträchtigt.

Der Erfindung liegt die Aufgabe zugrunde, ein KFZ-Einbauregal insbesondere für den Einbau in Kühl-Kastenfahrzeuge zu schaffen, das die oben geschilderten Erschwernisse berücksichtigt und sich leicht als Erstausrüstung und auch nachträglich in Kraftfahrzeuglieferfahrzeuge einbauen läßt.

Diese Aufgabe wird erfindungsgemäß mit einem KFZ-Einbauregal gelöst, wie es durch den Anspruch 1 gekennzeichnet ist. Weiterbildungen der Erfindung sind in den Unteransprüchen beschrieben.

Das erfindungsgemäße KFZ-Einbauregal besteht wie üblich aus seitlichen, vertikalen Stützholmen zur Befestigung an den Fahrzeugwänden sowie aus Fachböden zum Anbringen an die Stützholme in verschiedenen Höhen. Die Befestigung der Stützholme an den Fahrzeugwänden erfolgt jeweils mittels eines unteren und einen oberen Befestigungslagers. Das untere Befestigungslager stützt dabei nach der Erfindung den Stützholm derart ab, dass er eine geringe Schwenkbewegung in einer Ebene senkrecht zur Fahrzeugwand ausführen kann, während das obere Befestigungslager den Stützholm mit einstellbarem Abstand zur Fahrzeugwand festlegt. Damit können die Stützholme der Schräge bzw. Neigung einer Fahrzeugwand folgen und auch der jeweiligen Schräge bzw. Neigung der Fahrzeugwand des betreffenden Fahrzeugtyps angepaßt werden. Als Auflager für die Fachböden sind nach der Erfindung Adapterbügel vorgesehen, die an den Stützholmen mit verstellbarer Neigung und einstellbarem Abstand des Fachboden-Auflagers vom Stützholm angebracht werden können. Damit ist sichergestellt, dass das Auflager unabhängig von der jeweiligen Schräge des Stützholms den Fachboden korrekt, d. h. im allg. in horizontaler Ausrichtung untergreift. Außerdem können die Fachboden-Auflager von Adapterbügeln, die an gegenüber angeordneten Stützholmen angebracht sind, aufgrund ihrer Einstellbarkeit zur Kompensierung der Stützholmschräge mehr oder minder weit vom Stützholm beabstandet werden. Dies ermöglicht die Verwendung von Fachböden gleicher Abmessungen über einen bestimmten Höhenbereich von Rasterlöchern in den Stützholmen. Es ist also trotz Schräge der Stützholme nicht von Rasterloch zu Rasterloch ein unterschiedlich breiter Fachboden erforderlich, sondern es kann ein Fachboden gleicher Abmessungen über einen Höhenbereich von beispielsweise 5 Rasterlöchern eingesetzt werden, was die Herstellung und die Lagerhaltung vereinfacht.

Die Befestigungslager der Stützholme sind bei Verwendung des KFZ-Einbauregals für den Einbau in Kühl-Kastenfahrzeug so ausgebildet, dass eine Befestigung an der Fahrzeugwand durch die Wärmedämmung hindurch möglich ist. Dies gilt insbesondere für das obere Befestigungslager, während das untere Befestigungslager unmittelbar an den hochgezogenen Rand des Wannenbodens bzw. im dahinter angeordnete, versteifende Hohlkammerprofile geschraubt werden kann. Das obere Befestigungslager ist hierzu zweckmäßig als eine an die Fahrzeugwand anschraubbare Gewindestange ausgebildet, welche die Wärmedämmung überbrückt. Auf dieser Gewindestange ist dann der Stützholm zwischen einer aufschraubbaren Distanzhülse und einer Kontermutter mit einstellbarem Abstand zur Fahrzeugwand festlegbar.

Die Erfindung wird nachfolgend anhand beigefügter Zeichnungen näher erläutert. Es zeigen
Figur 1 perspektivisch eine Gesamtansicht des KFZ-Einbauregals nach der Erfindung;
Figur 2 perspektivisch im Detail das untere Befestigungslager der Stützholme;
Figur 3 im Schnitt und im Detail das untere Befestigungslager der Stützholme;
Figur 4 perspektivisch im Detail das obere Befestigungslager der Stützholme;
Figur 5 im Schnitt und im Detail das obere Befestigungslager der Stützholme;
Figur 6 perspektivisch im Detail den Adapterbügel mit Auflager für den Fachboden zur Anbringung an einen Stützholm;
Figur 7 in Draufsicht im Detail einen Adapterbügel mit Einzelauflager für einen Fachboden;
Figur 8 in Draufsicht im Detail einen Adapterbügel mit Doppelauflager zur Auflage benachbarter Fachböden; und
Figur 9 in Seitenansicht die Aufhängung von Fachböden am Stützholm in verschiedenen Rasterhöhen.

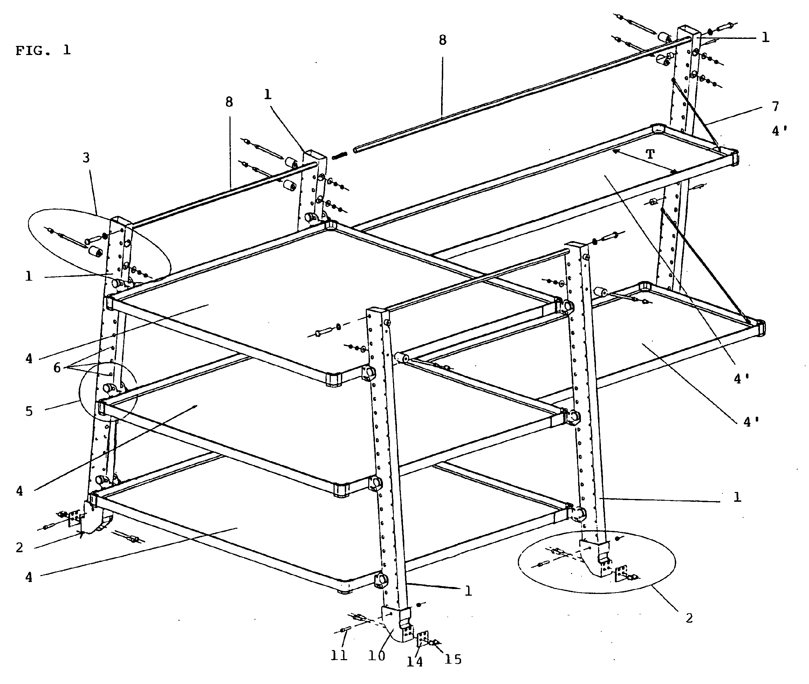

Figur 1 zeigt eine Gesamtübersicht des KFZ-Einbauregals nach der Erfindung in perspektivischer Darstellung. Grundsätzlich setzt sich das KFZ-Einbauregal aus Stützholmen 1 zur Befestigung an den (nicht dargestellten) Fahrzeugwänden mittels jeweils einen unteren 2 und eines oberen Lagers 3 sowie aus Fachböden 4 zusammen, die über Adapterbügel 5 in unterschiedlichen Höhen an den Stützholmen 1 gehalten sind. Wie dargestellt, nehmen die Stützholme 1 eine gewisse Schräge ein, wodurch sie der jeweiligen Verjüngung der seitlichen Fahrzeugwände nach oben folgen können. In den zweckmäßig als Rechteckhohlprofile ausgebildeten Stützholmen 1 sind im Höhenraster Rasterlöcher 6 ausgebildet, in welche die Adapterbügel 5 zum Tragen der Fachböden 4 in gewünschter Höhe einhängbar sind. Die Fachböden 4 erstrecken sich, wie dargestellt, zwischen gegenüberstehenden Stützholmen 1 über die gesamte Breite des Fahrzeuginnenraums. Das Regal ist mit Klappböden 4' kombinierbar, die sich zwischen benachbarten Stützholmen 1 einer Fahrzeugseite erstrecken und eine den örtlichen Gegebenheiten angepaßte Tiefe T haben. Die Klappböden 4' sind mittels seitlich einsteckbarer Bolzen in den Rasterlöchern 6 gehalten, wobei die herausgeklappte Horizontallage durch ein Stahlseil 7 und die hochgeklappte Vertikallage durch (nicht dargestellte) Anschlagbolzen gesichert ist. Zur Stabilisierung des Regals sind benachbarte Stützholme 1 über Zwischenrohre 8 miteinander verschraubt.

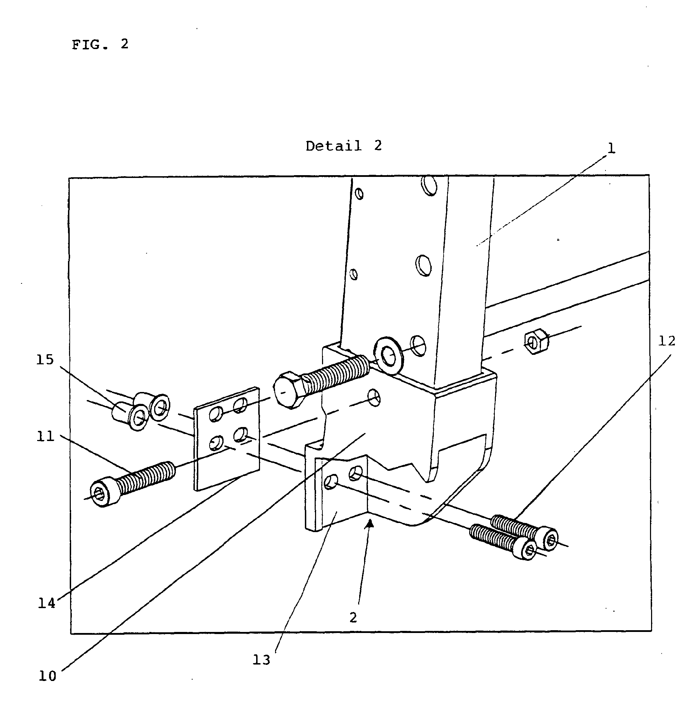

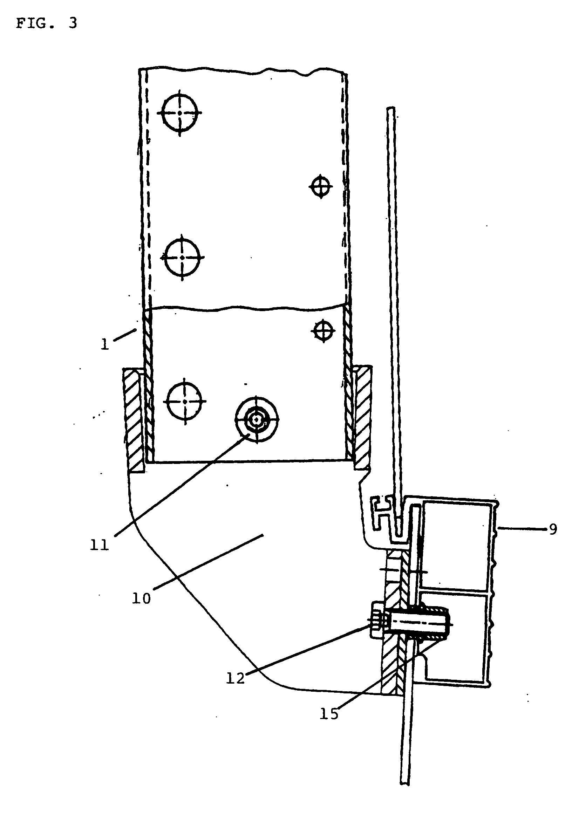

Die Lager 2 und 3 zur Befestigung der Stützholme 1 an den Fahrzeugwänden sind im Detail in Figuren 2 bis 5 dargestellt. Das untere Befestigungslager 2 dient der schwenkbaren Abstützung des Stützholms 1 in eine Richtung von und zur Fahrzeugwand derart, dass der Stützholm eine Schräglage entsprechend der Neigung der Fahrzeugwand des betreffenden Fahrzeugtyps einnehmen kann. In dem in Figuren 2 und 3 dargestellten Fall ist das untere Befestigungslager 2 als eine an ein Hohlkammerprofil 9 der Fahrzeugwand anschraubbare Konsole 10 ausgebildet. An dieser Konsole 10 ist das untere Ende des Stützholms 1 mittels eines Lagerbolzens 11 so festgelegt, dass der Stützholm 1 in einer Ebene senkrecht zur Fahrzeugwand eine Schwenkbewegung in Anpassung an die jeweilige Schräge bzw. Neigung der Fahrzeugwand ausführen kann. Die Befestigung der Konsole 10 am Hohlkammerprofil 9 der Fahrzeugwand erfolgt mittels Schraubbolzen 12, die durch einen Befestigungsflansch 13 der Konsole 10 unter Zwischenschaltung einer Gummischeibe 14 in Blindnietmuttern 15 eingeschraubt werden, die an dem Hohlkammerprofil 9 festgelegt sind. Zur Verdeutlichung der Befestigungsweise ist in Figur 2 die Konsole im unteren Bereich aufgeschnitten dargestellt.

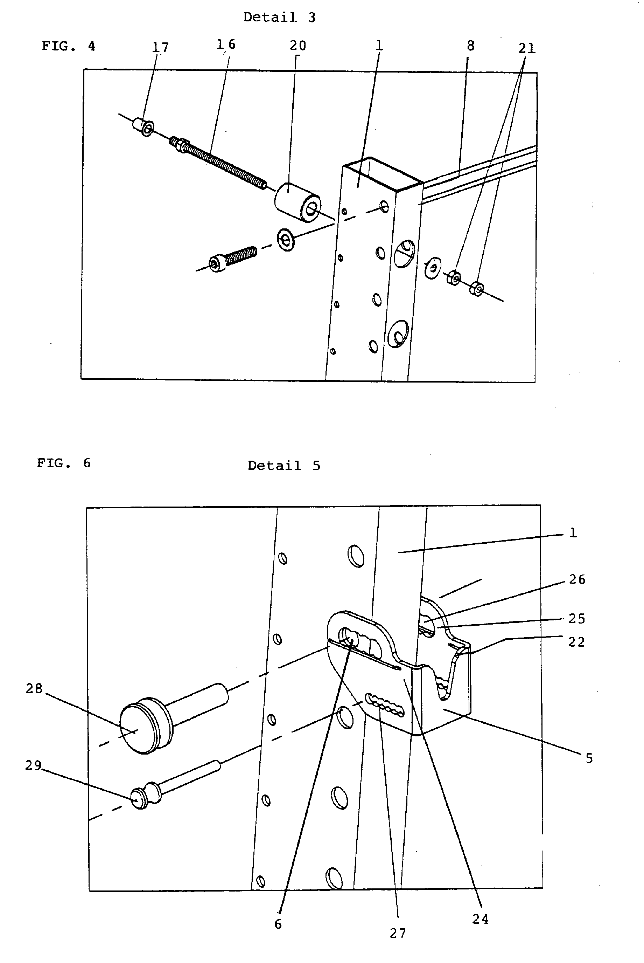

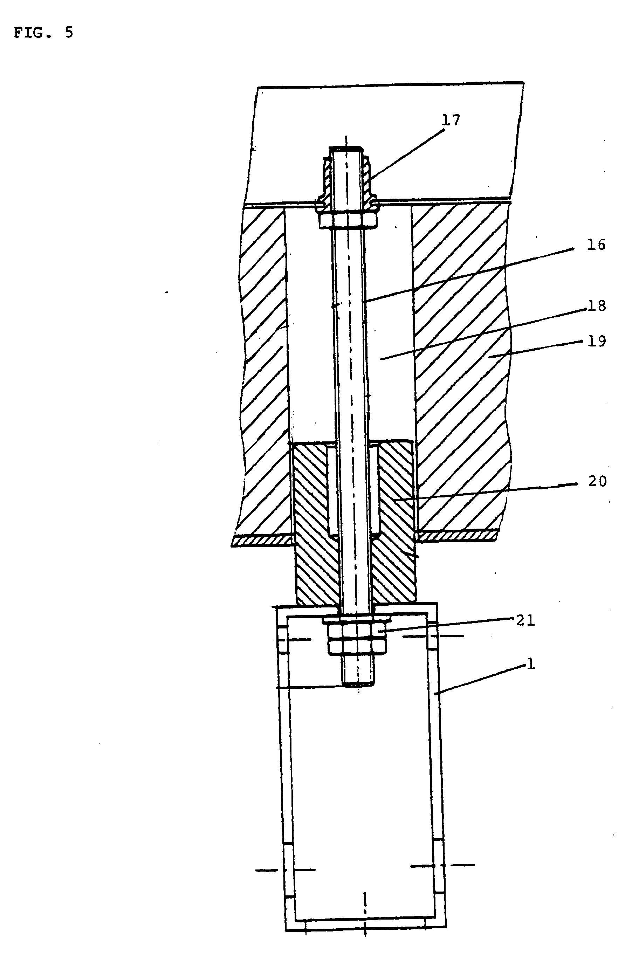

Das obere Befestigungslager weist, wie in Figuren 4 und 5 dargestellt, eine Gewindestange 16 zum Einschrauben in eine in die Fahrzeugwand eingelassene Blindnietmutter 17 auf. Im Falle des Einbaus des Regals in ein Kühl-Kastenfahrzeug erstreckt sich die Gewindestange 16 durch eine Öffnung 18 in der Wärmedämmung 19. Auf der Gewindestange 16 ist der Stützholm 1 in seinem oberen Bereich zwischen einer aufschraubbaren Distanzhülse 20 und Kontermuttern 21 mit einstellbarem Abstand zur Fahrzeugwand festgelegt. Wie in Figur 1 an zwei hinteren Stützholmen dargestellt, kann das obere Befestigungslager aus Festigkeitsgründen übereinander angeordnet zwei an die Fahrzeugwand anschraubbare Gewindestangen aufweisen, auf denen beiden der Stützholm 1 festgelegt ist.

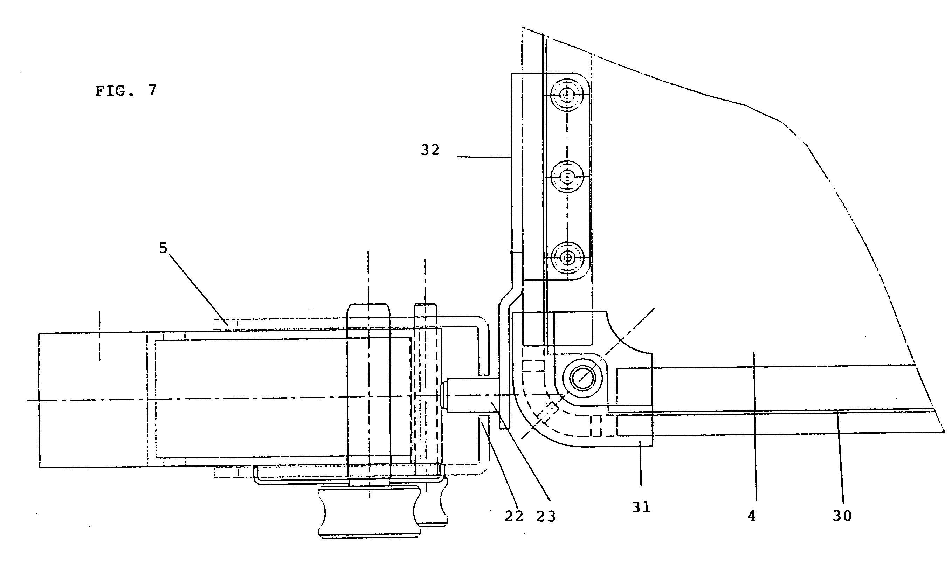

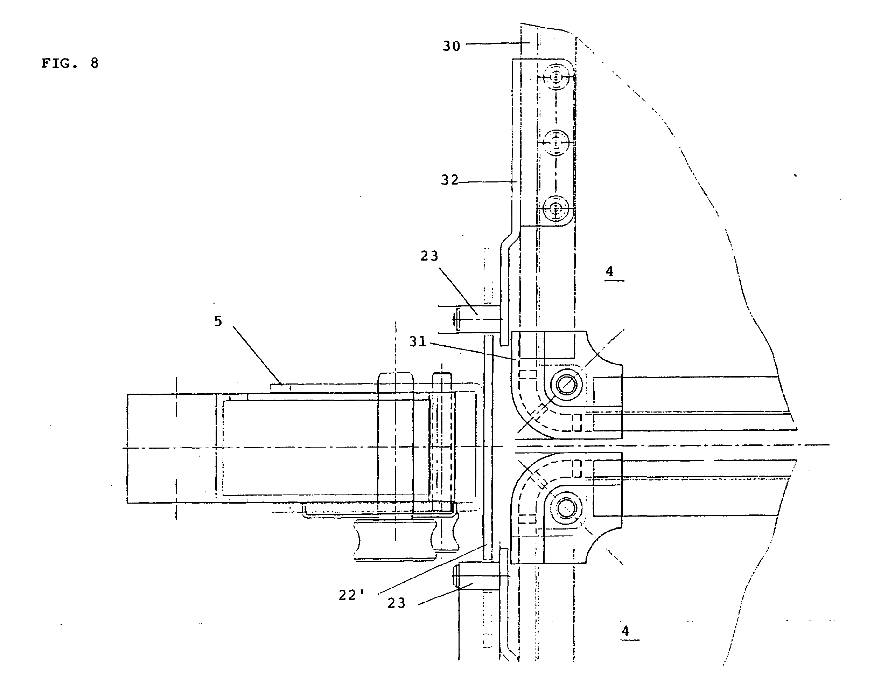

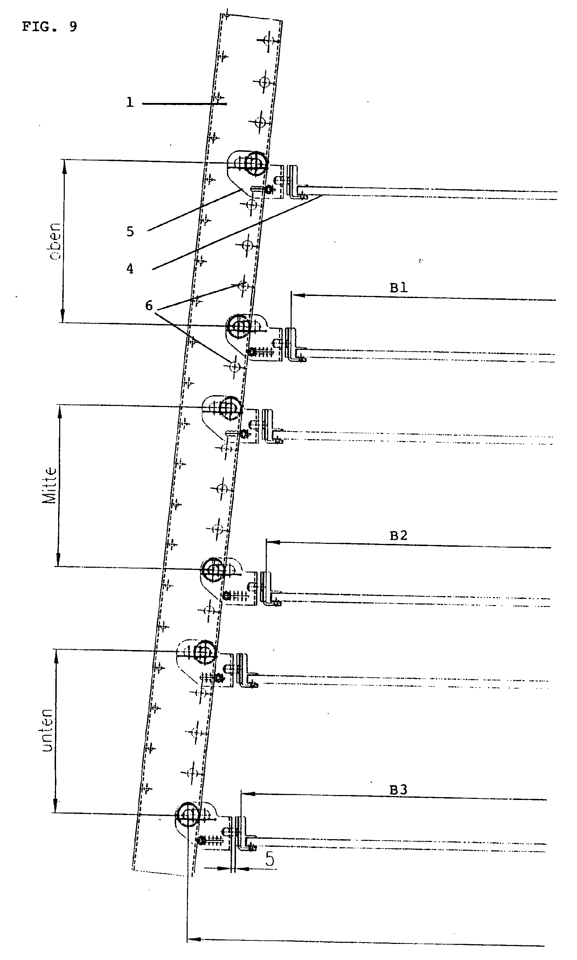

Ein Adapterbügel 5 zum Halten eines Fachbodens 4 in unterschiedlichen Höhen am Stützholm 1 ist im Detail in Figur 6 gezeigt. Der Adapterbügel 5 besitzt ein Auflager 22 in Form eines geschweiften, nach unten konisch zulaufenden Einschnitts, in den ein vom Außenrand des Fachbodens 4 vorstehender Tragbolzen 23 (Figuren 7 und 8) eingreifen kann. Der Adapterbügel 5 umgreift mit zwei Schenkeln 24, 25 den Holm 1 und in diesen Schenkeln 24, 25 sind - seitlich versetzt - je eine obere 26 und eine untere Lochreihe 27 ausgebildet. Die obere Lochreihe 26 kann in Ausfluchtung mit einem der Rasterlöcher 6 am Stützholm 1 gebracht werden, wonach die Lage des Adapterbügels 5 am Stützholm 1 mittels eines in das Rasterloch 6 einführbaren Absteckbolzens 28 festlegbar ist. Ein am Adapterbügel 5 festgelegter Federdraht, der in eine Kerbe im Kopf des Absteckstiftes 28 eingreift, dient dabei als Verliersicherung. Ein zweiter Absteckbolzen oder Absteckstift 29 ist durch die untere Lochreihe 27 einführbar zur Abstützung des Adapterbügels 5 gegen die Stirnseite des Stützholms 1. Durch Auswahl eines entsprechenden Loches in der oberen 26 und in der unteren Lochreihe 27, durch die der Absteckbolzen 28 bzw. der Absteckstift 29 gesteckt werden, können in Kompensation der Schräge bzw. Neigung des Stützholms 1 einerseits die Neigung des Adapterbügels 5 und andererseits der Abstand des Fachbodenauflagers 22 von der Stirnseite des Stützholms 1 eingestellt werden. Damit ist es möglich, wie dies anhand Figur 9 verdeutlicht wird, trotz Schräglage des Stützholms 1 über einen bestimmten Höhenbereich von z. B. 5 Rasterlöchern 6 im Stützholm 1 mit einem Fachboden gleicher Breitenabmessung auszukommen, was die Herstellung und die Lagerhaltung vereinfacht. Figur 9 zeigt beispielsweise Fachböden 4 der Breitenabmessungen B1-B3, die in die jeweils fünf Rasterlöcher 6 umfassenden Höhenbereiche oben, Mitte und unten einsetzbar sind.

Der in Figuren 6 und 7 gezeigte Adapterbügel 5 besitzt ein Einzelauflager 22 für den am Fachboden 4 angebrachten Tragbolzen 23. Wie Figur 8 zeigt, kann der Adapterbügel 5 wahlweise mit einem Doppelauflager 22' ausgerüstet sein, d. h. mit zwei Einschnitten für Tragbolzen 23 in Abstand voneinander. Mittels eines solchen Adapterbügels 5 mit Doppelauflager 22' können Fachböden 4 aneinander angrenzend am Stützholm 1 eingehängt werden.

Die Fachböden 4 wie auch die Klappböden 4' bestehen zweckmäßig aus einem Alu-Sandwichmaterial, wobei der Außenrand durch Einfassprofile 30 und Schutzecken 31 versteift ist. Mit den Einfassprofilen 30 sind nahe den Fachbodenecken Adapterwinkel 32 verschraubt, an denen ihrerseits die Tragbolzen 23 befestigt sind, mit denen der Fachboden 4 in das Fachbodenauflager 22, 22' der Adapterbügel 5 eingehängt wird.

## Patentansprüche

1. KFZ-Einbauregal, insbesondere für den Einbau in Kühl-Kastenfahrzeuge, bestehend aus seitlichen Stützholmen (1) zur Befestigung an den Fahrzeugwänden mittels jeweils eines unteren (2) und eines oberen Lagers (3) sowie aus Fachböden (4) zum Anbringen an die Stützholme in verschiedenen Höhen, **gekennzeichnet durch**
- ein unteres Befestigungslager (2) zur Abstützung des Stützholms (1) schwenkbar von und zur Fahrzeugwand,
- ein oberes Befestigungslager (3) zur Befestigung des Stützholms (1) mit einstellbarem Abstand zur Fahrzeugwand, und mit
- Adapterbügeln (5) mit Auflagern (22, 22') für die Fachböden (4) zum Anbringen an den Stützholmen (1) mit einstellbarer Neigung und einstellbarem Abstand des Auflagers (22, 22') mit Bezug zum Stützholm (1).

2. KFZ-Einbauregal nach Anspruch 1,
**dadurch gekennzeichnet, dass** das untere Befestigungslager (2) als eine an die Fahrzeugwand anschraubbare Konsole (10) ausgebildet ist, an welcher der Stützholm 1 mittels eines Lagerbolzens (11) schwenkbar angelenkt ist.

3. KFZ-Einbauregal nach Anspruch 1 oder 2,
**dadurch gekennzeichnet, dass** das obere Befestigungslager (3) eine an die Fahrzeugwand anschraubbare Gewindestange (16) aufweist, auf welcher der Stützholm (1) zwischen einer aufschraubbaren Distanzhülse (20) und einer Kontermutter (21) festlegbar ist.

4. KFZ-Einbauregal nach einem der Ansprüche 1 bis 3,
**dadurch gekennzeichnet, dass** der Stützholm (1) Rasterlöcher (6) zum Einhängen von Adapterbügeln (5) in unterschiedlichen Höhen aufweist.

5. KFZ-Einbauregal nach Anspruch 4,
**dadurch gekennzeichnet, dass** der Adapterbügel (5) mittels zwei Absteckbolzen (28, 29) an dem Stützholm (1) gehalten ist, von denen einer zum Durchstecken durch ein Rasterloch (6) und der andere zur Anlage an der Stützholmstirnwand vorgesehen ist.

6. KFZ-Einbauregal nach Anspruch 5,
**dadurch gekennzeichnet, dass** im Adapterbügel (5) jeweils eine Lochreihe (26, 27) für die zwei Absteckbolzen (28, 29) zum Durchstecken der Absteckbolzen an verschiedenen Positionen und damit zum Einstellen von Neigung und Abstand des Fachbodenauflagers (22, 22') mit Bezug zum Stützholm (1) ausgebildet ist.

7. KFZ-Einbauregal nach einem der vorangehenden Ansprüche,
**dadurch gekennzeichnet, dass** an dem Adapterbügel (5) ein Einzelauflager (22) für einen Fachboden (4) oder ein Doppelauflager (22') zur Auflage angrenzender Fachböden (4) ausgebildet ist.

8. KFZ-Einbauregal nach einem der vorangehenden Ansprüche, **gekennzeichnet durch** Fachböden (4, 4') aus Alu-Sandwichmaterial mit Einfassprofilen (30) und Schutzecken (31) sowie mit an den Einfassprofilen angebrachten Adapterwinkeln (32) mit seitlich abstehenden Tragbolzen (23) zum Einhängen in die Auflager (22, 22') der Adapterbügel (5) an den Stützholmen (1).

9. KFZ-Einbauregal nach einem der vorangehenden Ansprüche,
**dadurch gekennzeichnet, dass** die Stützholme (1) aus Alu-Rechteckhohlprofilen bestehen und dass benachbarte Stützholme über Zwischenrohre (8) als Abstandhalter miteinander verschraubt sind.

10. KFZ-Einbauregal nach einem der vorangehenden Ansprüche, **gekennzeichnet durch** die Kombination mit Klappböden (4'), die um seitlich vorstehende Bolzen herausklappbar zwischen benachbarten Stützholmen (1) aufgenommen sind, wobei die herausgeklappte Horizontallage **durch** ein Stahlseil (7) oder **durch** Anschlagbolzen gesichert ist.
